(19) Europäisches Patentamt
European Patent Office
Office européen des brevets

(11) **EP 2 755 417 A1**

(12) **EUROPEAN PATENT APPLICATION**
published in accordance with Art. 153(4) EPC

(43) Date of publication:
**16.07.2014 Bulletin 2014/29**

(21) Application number: **12830550.5**

(22) Date of filing: **10.09.2012**

(51) Int Cl.:
*H04W 24/10* (2009.01)   *H04B 7/04* (2006.01)
*H04W 88/08* (2009.01)   *H04W 88/02* (2009.01)
*H04B 7/06* (2006.01)

(86) International application number:
**PCT/CN2012/081181**

(87) International publication number:
**WO 2013/034109 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2011   CN 201110265893**

(71) Applicant: **Huawei Technologies Co., Ltd Shenzhen, Guangdong 518129 (CN)**

(72) Inventors:
• **XIAO, Dengkun**
  **Shenzhen**
  **Guangdong 518129 (CN)**

• **WU, Tong**
  **Shenzhen**
  **Guangdong 518129 (CN)**
• **LI, Anjian**
  **Shenzhen**
  **Guangdong 518129 (CN)**
• **CUI, Jie**
  **Shenzhen**
  **Guangdong 518129 (CN)**

(74) Representative: **Isarpatent**
  **Patent- und Rechtsanwälte**
  **Friedrichstrasse 31**
  **80801 München (DE)**

(54) **AAS-BASED METHOD, SYSTEM, UE, AND BASE STATION FOR INFORMATION EXCHANGE**

(57)    Embodiments of the present invention disclose an advanced antenna system AAS-based method for information interaction, which includes: sending, by a base station, a connection reconfiguration request to a user equipment (UE) which accesses the base station, and receiving a measurement report message returned from the UE, where the measurement report message carries three-dimensional coordinate information of the UE; performing, by the base station, beamforming according to the three-dimensional coordinate information of the UE carried in the measurement report message. Embodiments of the invention further disclose an AAS-based system for information interaction, a UE and a base station. Embodiments of the present invention can provide a more effective and more accurate beam to the UE, improve communication service quality and enhance performance of a wireless communication system.

FIG. 1

**Description**

This application claims priority to Chinese Patent Application No. 201110265893.9, filed on September 8, 2011, entitled "AAS-BASED INFORMATION INTERACTION METHOD, SYSTEM, UE AND BASE STATION", which is hereby incorporated by reference in its entirety.

**TECHNICAL FIELD**

The present invention relates to the field of AAS (Advanced Antenna System, advanced antenna system) technologies and, in particular, to an AAS-based method for information interaction, a system, a UE (User Equipment, user equipment) and a base station.

**BACKGROUND**

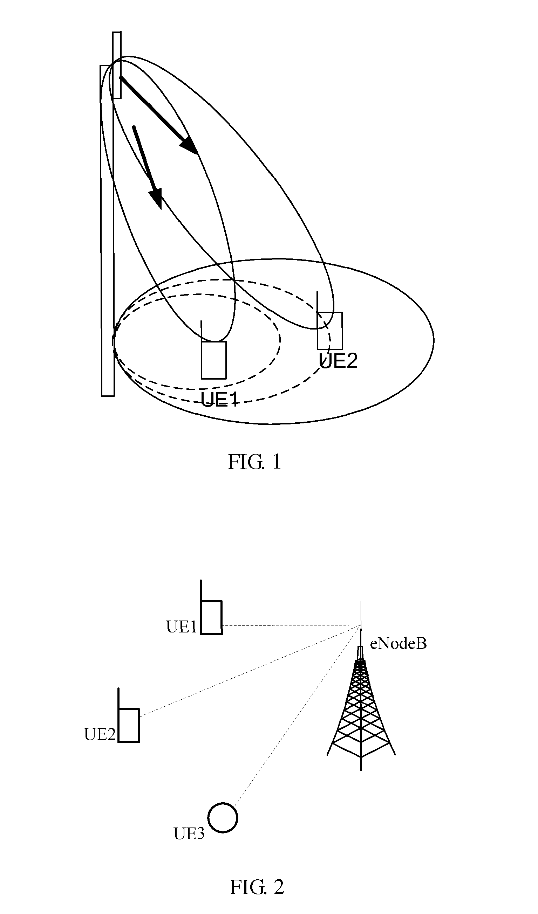

An AAS may include an antenna array, the antenna array is composed of a plurality of antenna array elements, an antenna array element may include: a horizontal dimension (horizontal direction) array element and a vertical dimension (vertical direction) array element. Please see FIG. 1 for details, FIG. 1 is a schematic structural diagram of an AAS; the AAS can self-adaptively adjust the antenna configuration (i.e. antenna mode), and perform better data transmission and services for a particular UE after performing beamforming on the beams emitted from the antenna array. Currently, the AAS has been widely used in base stations of wireless communication systems, for example, in an eNodeB (E-UTRAN Node B, E-UTRAN Node B), spatial dimension is added to the AAS on basis of the conventional time, frequency, and code resources, which makes the wireless communication system meet high throughput requirements of modern data services better, and achieves the purpose of enlarging network coverage and improving system capacity, the AAS has become one of the important candidate technologies of future wireless communication systems.

In an existing AAS-based wireless communication system, the information interaction process between a UE and a base station is: when the UE successfully accesses a certain base station, the base station estimates the horizontal dimension AOA (Angle of Arrival, angle of arrival) of the UE relative to the base station, and performs beamforming and adjustment according to the estimation results, to provide a more accurate beam to the UE. Where, the horizontal dimension AOA and the vertical dimension AOA of the UE relative to the base station are important parameters of the beamforming, but in the existing AAS-based information interaction solution, the estimation of the vertical dimension AOA of the UE is a technical difficulty for the base station, therefore, the base station performs beamforming and provides the beam to the UE based only on the estimated horizontal dimension AOA, this beam presents a radiated state on the vertical dimension, and is a wide beam, which is not effective and not accurate.

**SUMMARY**

The technical problem to be solved in embodiments of the present invention is to provide an AAS-based method for information interaction, a system, a UE and a base station, which can provide a more effective and more accurate beam to the UE, improve communication service quality and enhance performance of the wireless communication system.

To solve the above technical problem, in one aspect, an embodiment of the present invention provides an AAS-based method for information interaction, which includes:

sending, by a base station, a connection reconfiguration request to a UE which accesses the base station, and receiving a measurement report message returned from the UE, where the measurement report message carries three-dimensional coordinate information of the UE;
performing, by the base station, beamforming according to the three-dimensional coordinate information of the UE carried in the measurement report message.

In another aspect, an embodiment of the present invention further provides another AAS-based method for information interaction, which includes:

receiving, by a UE, a connection reconfiguration request sent by a base station, and returning a measurement report message to the base station according to the connection reconfiguration request, where the measurement report message carries three-dimensional coordinate information of the UE, so that the base station performs beamforming according to the three-dimensional coordinate information of the UE carried in the measurement report message.

In another aspect, an embodiment of the present invention further provides a UE, which includes:

a request receiving module, configured to receive a connection reconfiguration request sent by a base station;
a message returning module, configured to return a measurement report message to the base station according to the connection reconfiguration request received by the request receiving module, where the measurement report message carries three-dimensional coordinate information of the UE, so that the base station performs beamforming according to the three-dimensional coordinate information of the UE carried in the measurement report message.

In another aspect, an embodiment of the present invention further provides a base station, the base station is provided with an AAS, the base station further includes:

a transceiver module, configured to send a connection reconfiguration request to a UE which accesses the base station, and receive a measurement report message returned from the UE, where the measurement report message carries three-dimensional coordinate information of the UE;
a forming module, configured to perform beamforming according to the three-dimensional coordinate information of the UE carried in the measurement report message received by the transceiver module.

In another aspect, an embodiment of the present invention further provides an AAS-based system for information interaction, which includes the above UE or base station.
The implementation of embodiments of the present invention has the following beneficial effects:

In embodiments of the present invention, the base station performs beamforming performs beamforming according to the three-dimensional coordinate information reported by the UE which accesses the base station, since the beamforming is no longer simply based on the results of the horizontal dimension AOA of the UE estimated by the base station, but based on the three-dimensional coordinate information reported by the UE, the horizontal dimension AOA and the vertical dimension AOA of the UE relative to the base station are sufficiently considered, so that the base station can provide a more effective and more accurate beam to the UE, thereby improving the communication service quality and enhancing the performance of the wireless communication system.

## BRIEF DESCRIPTION OF DRAWINGS

To illustrate the technical solutions of embodiments of the present invention or in the prior art more clearly, the accompanying drawings used for describing the embodiments or the prior art are briefly described hereunder, apparently, the accompanying drawings in the following descriptions merely show some embodiments of the present invention, and persons of ordinary skill in the art can obtain other drawings according to the accompanying drawings without creative efforts.

FIG. 1 is a schematic structural diagram of an AAS;
FIG. 2 is a schematic structural diagram of an AAS-based system for information interaction according to an embodiment of the present invention;
FIG. 3 is a schematic structural diagram of a UE according to an embodiment of the present invention;
FIG. 4 is a schematic structural diagram of a message returning module shown in FIG. 3 according to an embodiment;
FIG. 5 is a schematic structural diagram of a UE according to another embodiment of the present invention;
FIG. 6 is a schematic structural diagram of a base station according to an embodiment of the present invention;
FIG. 7 is a schematic structural diagram of a forming module shown in FIG. 6 according to an embodiment;
FIG. 8 is a schematic diagram of a horizontal dimension AOA and a vertical dimension AOA of a UE relative to a base station according to the present invention;
FIG. 9 is a schematic structural diagram of a base station according to another embodiment of the present invention;
FIG. 10 is a flowchart of an AAS-based method for information interaction according to an embodiment of the present invention;
FIG. 11 is a flowchart of step S103 shown in FIG. 10 according to an embodiment;
FIG. 12 is a flowchart of an AAS-based method for information interaction according to another embodiment of the present invention;
FIG. 13 is a flowchart of step S202 shown in FIG. 12 according to an embodiment;
FIG. 14 is a flowchart of an AAS-based method for information interaction according to another embodiment of the present invention.

## DESCRIPTION OF EMBODIMENTS

The technical solutions in embodiments of the present invention are described in the following clearly and completely with reference to the accompanying drawings, obviously, the embodiments described are only a part of embodiments of the present invention, rather than all embodiments. All other embodiments obtained by persons of ordinary skill in the art on the basis of the embodiments herein without any creative effort fall within the protection scope of the present invention.

In the solutions provided by embodiments of the present invention, a base station performs beamforming according to three-dimensional coordinate information of a UE carried in a measurement report message reported by the UE which accesses the base station; so that the base station can provide a more effective and accurate beam to the UE, thereby improving the communication service quality and enhancing the performance of the wireless communication system.

Where, the connection reconfiguration request may include measurement configuration information, the measurement configuration information carries the information which is used to request the UE to report three-dimensional coordinates of the UE. The base station is provided with an AAS, the connection reconfiguration request may also include an AAS characteristic parameter of the base station; the AAS characteristic parameter of the base station may include: the number of horizontal dimension antenna ports in the AAS antenna array, the number of vertical dimension antenna ports in the AAS antenna array, and a precoding codebook set.

Where, the number of horizontal dimension antenna ports in the AAS antenna array and the number of vertical dimension antenna ports in the AAS antenna array can determine the AAS antenna configuration (i.e. antenna mode) of the base station, for example: if the number of horizontal dimension antenna ports in the AAS antenna array is 4, the number of vertical dimension antenna ports is 2, then it can be determined that the AAS antenna array is a 4*2 array, that is, the AAS antenna configuration is 4*2, which represents the antenna configuration of four horizontal dimension antenna array elements and two vertical dimension array elements. It should be noted that, once the AAS is set at the base station, the AAS antenna configuration is fixed accordingly, only one type of antenna configuration can be determined according to the number of horizontal dimension antenna ports of the AAS and the number of vertical dimension antenna ports. Where, one type of antenna configuration may correspond to one type of precoding codebook.

In the solutions provided by embodiments of the present invention, the UE may be: a mobile phone, a PDA (Personal Digital Assistant, personal digital assistant), a PC (Personal Computer, personal computer), a car-mounted terminal and other user equipments. The base station may be a base station in the wireless communication system, for example: an eNodeB (evolved NodeB, evolved NodeB) in an LTE (Long Term Evolution, long term evolution) system, or a NodeB (NodeB) in a UMTS (Universal Mobile Telecommunications System, universal mobile telecommunications) system. Unless otherwise stated, the base stations are all described by taking the eNodeB as an example in subsequent embodiments of the present invention.

An AAS-based system for information interaction provided by embodiments of the present invention is described in the following in details with reference to FIG. 2.

Please see FIG. 2, FIG. 2 is a schematic structural diagram of an AAS-based system for information interaction according to an embodiment of the present invention; the system may include: an eNodeB and at least one UE which accesses the eNodeB (the figure shows only three UEs, but in practical applications, the amount of the UEs can be determined according to actual needs, for example, it can be one, two, or more than three); where the eNodeB is provided with an AAS.

The eNodeB performs self-adaptive adjustment of a beamforming parameter according to three-dimensional coordinate information reported by the UE which accesses the eNodeB, and performs beamforming according to the adjusted result, so that the eNodeB can provide a more effective and more accurate beam to the UE, thereby improving the communication service quality, and enhancing the performance of the wireless communication system.

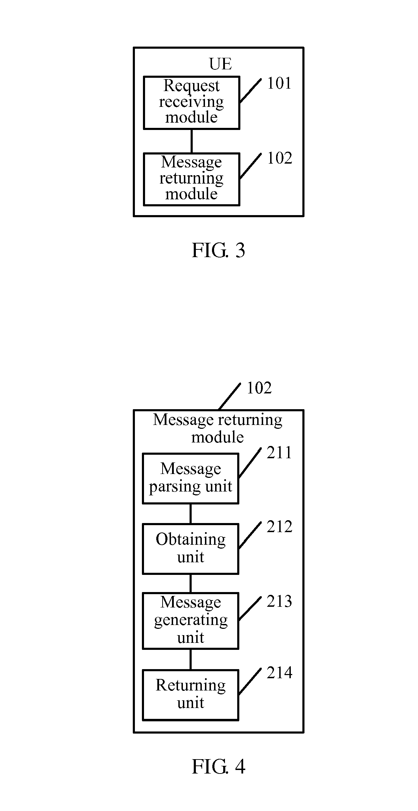

A UE provided by embodiments of the present invention is described in the following in details with reference to FIG. 3-FIG. 5. The UE of the following embodiment can be applied to the above AAS-based system for information interaction.

Please see FIG. 3, FIG. 3 is a schematic structural diagram of a UE according to an embodiment of the present invention; the UE may include:

A request receiving module 101, configured to receive a connection reconfiguration request sent by a base station.

In the AAS, information interaction is performed between the eNodeB and the UE based on a RRC (Radio Resource Control, radio resource control protocol) protocol; after the UE successfully accesses a certain serving eNodeB, the eNodeB can send the connection reconfiguration request (Connection Reconfiguration) to the UE, the connection reconfiguration request is a signaling message, for example: RRC Connection Reconfiguration. Where the connection reconfiguration request may include: measurement configuration (MeasConfig) information, the measurement configuration information may carry the information which is used to request the UE to report three-dimensional coordinates of the UE, so as to request the UE to report the three-dimensional coordinate information of the UE after receiving the connection reconfiguration request.

A message returning module 102, configured to return a measurement report message to the base station according to the connection reconfiguration request received by the request receiving module 101, where the measurement report message carries three-dimensional coordinate information of the UE, so that the base station performs beamforming according to the three-dimensional coordinate information of the UE carried in the measurement report message.

The UE can report the three-dimensional coordinate information of the UE to the eNodeB through the measurement report message, so as to respond to the connection reconfiguration request sent by the eNodeB. The three-dimensional coordinate information of the UE can be used for beamforming of the eNodeB, so that the eNodeB can provide a more effective and more accurate beam to the UE.

Please see FIG. 4, FIG. 4 is a schematic structural diagram of the message returning module shown in FIG. 3 according to an embodiment; the message returning module 102 may include:

A message parsing unit 211, configured to parse out measurement configuration information from the connection reconfiguration request received by the request receiving module 101.

The connection reconfiguration request sent by the eNodeB may contain measurement configuration information. The message parsing unit 211 can parse out the measurement configuration information from the connection reconfiguration request, please refer to the process of parsing, by the UE, the signaling message sent by the eNodeB in the prior art for the specific parsing process, which will not be repeated here.

An obtaining unit 212, configured to obtain the three-dimensional coordinate information of the UE according to the information which is used to request the UE to report three-dimensional coordinates of the UE, where the information is carried in the measurement configuration information obtained through parsing by the message parsing unit 211.

With the development of GPS (Global Positioning System, global positioning system), applications of the GPS are more and more wide in the UE, and the frequency of use is more and more high, for example: the UE may contain a GPS module, the GPS module can achieve the positioning of the UE, and provide the three-dimensional coordinate information of the UE. The obtaining unit 22 may obtain the three-dimensional coordinate information $(x_1, y_1, z_1)$ of the UE by adopting the GPS module of the UE. It should be noted that, with the development of positioning technologies, the obtaining unit 22 may also obtain the three-dimensional coordinate information of the UE by adopting other positioning technologies, for example: obtaining the three-dimensional coordinate information of the UE based on assistant positioning of the base station, etc.

A message generating unit 213, configured to encapsulate the three-dimensional coordinate information of the UE obtained by the obtaining unit 212 and form a measurement report message.

The message generating unit 213 encapsulates the obtained three-dimensional coordinate information of the UE and forms the measurement report (Measurement Report) message. It can be understood that, the three-dimensional coordinate information of the UE contained in the measurement report message is a response to the information which is used to request the UE to report the three-dimensional coordinates of the UE and is carried in the measurement configuration information contained in the connection reconfiguration request sent by the eNodeB.

A returning unit 214, configured to report the measurement report message generated by the message generating unit 213 to the base station.

The returning unit 214 sends the measurement report message carrying the three-dimensional coordinate information of the UE to the eNodeB, so that the eNodeB can perform beamforming according to the three-dimensional coordinate information of the UE carried in the measurement report message, thus the eNodeB can provide a more effective and more accurate beam to the UE.

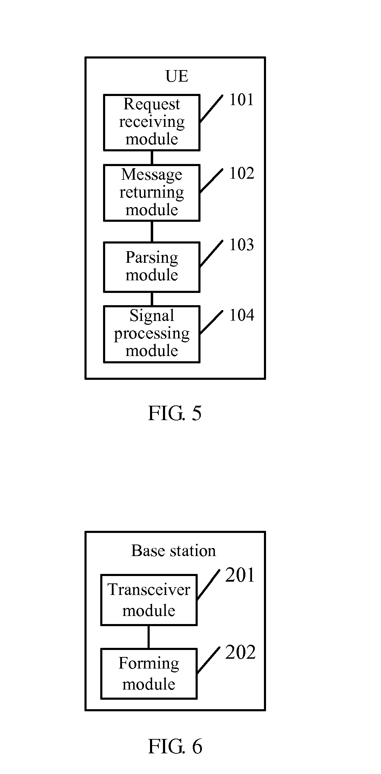

Please see FIG. 5, FIG. 5 is a schematic structural diagram of a UE according to another embodiment of the present invention; the UE may include a request receiving module 101 and a message returning module 102, the UE may further include:

A parsing module 103, configured to parse out an AAS characteristic parameter of the base station from the connection reconfiguration request.

The connection reconfiguration request sent by the eNodeB may include the AAS characteristic parameter of the eNodeB, the AAS characteristic parameter may be contained in the antenna information (Antenna Info) of the connection reconfiguration request. Regarding the specific process of parsing the AAS characteristic parameter by the parsing module 103, please refer to the process of parsing, by the UE, the signaling message sent by the eNodeB in the prior art, which will not be repeated here. It can be understood that, the parsing module 103 and the message parsing unit 211 shown in FIG. 4 can be combined into one unit, the combined unit can parse the connection reconfiguration request sent by the eNodeB, and obtain the measurement configuration information and the AAS characteristic parameter.

A signal processing module 104, configured to select, by adopting the number of horizontal dimension antenna ports in the AAS antenna array and the number of vertical dimension antenna ports in the AAS antenna array which are obtained by the parsing module 103, a precoding codebook corresponding to the number of horizontal dimension antenna ports in the AAS antenna array and the number of vertical dimension antenna ports in the AAS antenna array from the precoding codebook set of the AAS characteristic parameter of the base station, to parse a beamforming signal from the base station; or select, according to the number of horizontal dimension antenna ports in the AAS antenna array and the number of vertical dimension antenna ports in the AAS antenna array which are contained in the AAS characteristic parameter of the base station, the precoding codebook corresponding to the number of horizontal dimension antenna ports in the AAS antenna array and the number of vertical dimension antenna ports in the AAS antenna array from the precoding codebook set of the AAS characteristic parameter of the base station, to process a signal transmitted to the base station.

The eNodeB may calculate and obtain the parameter needed for more accurate beamforming according to the three-dimensional coordinate information reported by the UE, and may perform the beamforming according to the parameter obtained by calculation, so as to provide a more accurate beam to the UE. After the beamforming, the eNodeB and the UE can perform high quality information interaction: when the eNodeB needs to transmit a signal to the UE, the eNodeB uses the precoding codebook corresponding to the number of horizontal dimension antenna ports in the AAS antenna array and the number of vertical dimension antenna ports in the AAS antenna array (i.e. AAS antenna configuration) to process the transmission signal, forms a beamforming signal and transmits to the UE, the signal processing module 104 parses the beamforming signal from the base station by using the same precoding codebook as that of the eNodeB (i.e. the precoding codebook corresponding to the number of horizontal dimension antenna ports in the AAS antenna array and the number of vertical dimension antenna ports in the AAS antenna array). When the UE needs to transmit a signal to the eNodeB, the UE uses the precoding codebook corresponding to the number of horizontal dimension antenna ports in the AAS antenna array and the number of vertical dimension antenna ports in the AAS antenna array to process the transmission signal and then transmits to the eNodeB, so that the eNodeB can parse the signal from the UE by using the same precoding codebook as that of the UE.

In embodiments of the present invention, the base station performs beamforming performs beamforming according to the three-dimensional coordinate information reported by the UE which accesses the base station, since the beamforming is no longer simply based on the results of the horizontal dimension AOA of the UE estimated by the base station, but based on the three-dimensional coordinate information reported by the UE, the horizontal dimension AOA and the vertical dimension AOA of the UE relative to the base station are sufficiently considered, so that the base station can provide a more effective and more accurate beam to the UE, thereby improving the communication service quality and enhancing the performance of the wireless communication system.

A base station provided by embodiments of the present invention is described in the following in details with reference to FIG. 6-FIG. 9. The base station of the following embodiment can be applied to the above AAS-based system for information interaction.

Please see FIG. 6, FIG. 6 is a schematic structural diagram of a base station according to an embodiment of the present invention; the base station may include:

A transceiver module 201, configured to send a connection reconfiguration request to a UE which accesses the base station.

In the AAS, information interaction is performed between the eNodeB and the UE based on the RRC protocol. After the UE successfully accesses the eNodeB, the eNodeB sends the connection reconfiguration request to the UE, where the connection reconfiguration request may include: measurement configuration (MeasConfig) information, the measurement configuration information may carry the information which is used to request the UE to report three-dimensional coordinates of the UE, so as to request the UE to report the three-dimensional coordinate information of the UE after receiving the connection reconfiguration request. Regarding the measurement configuration information, the following can be referred to:

```
-- ASN1START
 MeasConfig::= SEQUENCE {
  -- Measurement objects
  measObjectToRemoveList MeasObjectToRemoveList OPTIONAL, --Need ON
  measObjectToAddModList MeasObjectToAddModList OPTIONAL,--Need ON
  -- Reporting configurations
  reportConfigToRemoveList ReportConfigToRemoveList OPTIONAL, -- Need ON
  reportConfigToAddModList ReportConfigToAddModList OPTIONAL, -- Need ON
  -- Measurement identities
  measIdToRemoveList MeasIdToRemoveList OPTIONAL,-- Need ON
  measIdToAddModList MeasIdToAddModList OPTIONAL, -- Need ON
  -- Other parameters
  quantityConfig QuantityConfig OPTIONAL,-- Need ON
  measGapConfig MeasGapConfig OPTIONAL,-- Need ON
  s-Measure RSRP-Range OPTIONAL,-- Need ON
UE coordinate (x,y,z)
  preRegistrationInfoHRPD PreRegistrationInfoHRPD OPTIONAL,--Need OP
  speedStatePars CHOICE {
```

```
  release NULL,
  setup SEQUENCE {
    mobilityStateParameters MobilityStateParameters,
    timeToTrigger-SF SpeedStateScaleFactors
  }
} OPTIONAL, -- Need ON
}
MeasIdToRemoveList::= SEQUENCE (SIZE (1..maxMeasId)) OF MeasId
MeasObjectToRemoveList::=SEQUENCE(SIZE(1..maxObjectId)) OF MeasObjectId
ReportConfigToRemoveList::=SEQUENCE(SIZE(1..maxReportConfigId)) OF reportConfigId
-- ASN1STOP
```

The transceiver module 201 is also configured to receive a measurement report message returned from the UE, where the measurement report message carries the three-dimensional coordinate information of the UE.

In response to the connection reconfiguration request of the request module 201, the UE may report the three-dimensional coordinate information of the UE to the eNodeB through the measurement report message, the three-dimensional coordinate information can be measurement results (MeasResults) obtained by the UE based on positioning technologies, such as GPS, etc. Regarding the measurement report message the following can be referred to:

```
-- ASN1START
MeasResults::= SEQUENCE {
 measId MeasId,
 measResultPCell SEQUENCE {
   rsrpResult RSRP-Range,
   rsrqResult RSRQ-Range
 },
 measResultNeighCells CHOICE {
   measResultListEUTRA MeasResultListEUTRA,
   measResultListUTRA MeasResultListUTRA,
   measResultListGERAN MeasResultListGERAN,
   measResultsCDMA2000 MeasResultsCDMA2000,
 } OPTIONAL,
 ...,
 [[ measResultForECID-r9 MeasResultForECID-r9 OPTIONAL,
 ]]
 [[ locationInfo-r10 LocationInfo-r10 OPTIONAL,
   measResultServFreqList-r10 MeasResultServFreqList-r10 OPTIONAL
 ]]
 }
 MeasResultListEUTRA::= SEQUENCE (SIZE (1..maxCellReport)) OF MeasResultEUTRA
MeasResultEUTRA::= SEQUENCE {
 physCellId PhysCellId,
 cgi-Info SEQUENCE {
   cellGlobalId CellGlobalIdEUTRA,
   trackingAreaCode TrackingAreaCode,
   plmn-IdentityList PLMN-IdentityList2 OPTIONAL
 } OPTIONAL,
 measResult SEQUENCE {
   rsrpResult RSRP-Range OPTIONAL,
   rsrqResult RSRQ-Range OPTIONAL,
   ...,
   [[ additionalSI-Info-r9 AdditionalSI-Info-r9 OPTIONAL
   ]]
 }
}
MeasResultServFreqList-r10::= SEQUENCE (SIZE (1..maxServCell-r10)) OF
MeasResultServFreq-r10
MeasResultServFreq-r10::= SEQUENCE {
 servFreqId ServCellIndex-r10,
 measResultSCell SEQUENCE {
   rsrpResultSCell RSRP-Range,
   rsrqResultSCell RSRQ-Range
```

```
    } OPTIONAL,
  measResultBestNeighCell SEQUENCE {
    physCellId PhysCellId,
    rsrpResultNCell RSRP-Range,
    rsrqResultNCell RSRQ-Range
    } OPTIONAL,
    ...
}
MeasResultListUTRA::= SEQUENCE (SIZE (1..maxCellReport)) OF
MeasResultUTRA
MeasResultUTRA::= SEQUENCE {
  physCellId CHOICE {
    fdd PhysCellIdUTRA-FDD,
    tdd PhysCellIdUTRA-TDD
    },
  cgi-Info SEQUENCE {
    cellGlobalId CellGlobalIdUTRA,
    locationAreaCode BIT STRING (SIZE (16)) OPTIONAL,
    routingAreaCode BIT STRING (SIZE (8)) OPTIONAL,
    plmn-IdentityList PLMN-IdentityList2 OPTIONAL
    } OPTIONAL,
  measResult SEQUENCE {
    utra-RSCP INTEGER (-5..91) OPTIONAL,
    utra-EcN0 INTEGER (0..49) OPTIONAL,
    ...,
    [[ additionalSI-Info-r9 AdditionalSI-Info-r9 OPTIONAL
    ]]
    }
}
MeasResultListGERAN::= SEQUENCE (SIZE (1..maxCellReport)) OF
MeasResultGERAN
MeasResultGERAN::= SEQUENCE {
  carrierFreq CarrierFreqGERAN,
  physCellId PhysCellIdGERAN,
  cgi-Info SEQUENCE {
    cellGlobalId CellGlobalIdGERAN,
    routingAreaCode BIT STRING (SIZE (8)) OPTIONAL
    } OPTIONAL,
  measResult SEQUENCE {
    rssi INTEGER (0..63),
    }
    }
MeasResultsCDMA2000::= SEQUENCE {
  preRegistrationStatusHRPD BOOLEAN,
  measResultListCDMA2000 MeasResultListCDMA2000
}
MeasResultListCDMA2000::= SEQUENCE (SIZE (1..maxCellReport)) OF
MeasResultCDMA2000
MeasResultCDMA2000::= SEQUENCE {
  physCellId PhysCellIdCDMA2000,
  cgi-Info CellGlobalIdCDMA2000 OPTIONAL,
  measResult SEQUENCE {
    pilotPnPhase INTEGER (0..32767) OPTIONAL,
    pilotStrength INTEGER (0..63),
    ...
    }
}
MeasResultForECID-r9::= SEQUENCE {
  ue-RxTxTimeDiffResult-r9 INTEGER (0..4095),
  currentSFN-r9 BIT STRING (SIZE (10))
}
PLMN-IdentityList2::= SEQUENCE (SIZE (1..5)) OF PLMN-Identity
AdditionalSI-Info-r9::= SEQUENCE {
```

```
    csg-MemberStatus-r9 ENUMERATED {member} OPTIONAL,
    csg-Identity-r9 CSG-Identity OPTIONAL
}
    UE coordinate (x,y,z)
-- ASN1STOP
```

A forming module 202, configured to perform beamforming according to the three-dimensional coordinate information of the UE carried in the measurement report message which is received by the transceiver module 201.

The forming module 202 may calculate and obtain the horizontal dimension AOA and vertical dimension AOA of the UE relative to the eNodeB according to the three-dimensional coordinate information of the UE. The horizontal dimension AOA and vertical dimension AOA are important parameters of the beamforming, the forming module 202 may perform self-adaptive adjustment and beamforming based on the two parameter values obtained through calculation, so as to provide a more effective and more accurate beam to the UE.

Because of the complexity of the radio environment, if the eNodeB performs the beamforming based on the estimation of the horizontal dimensional AOA of the UE, there is usually a deviation for the estimation result, thus it is impossible for the eNodeB to provide a more effective and more accurate beam to the UE, not only cannot the target user equipment obtain relatively high service quality, but also the interference may be caused to other user equipments, thereby reducing the performance of the wireless communication system. In embodiments of the present invention, the eNodeB calculates and obtains the horizontal dimensional AOA and the vertical dimensional AOA of the UE relative to the eNodeB based on the three-dimensional coordinate information reported by the UE, and performs beamforming on this basis; whether in a simple propagation environment, such as an application scenario of a square, etc.; or in a complex propagation environment, such as an application scenario obscured by buildings, the horizontal dimensional AOA and the vertical dimensional AOA values obtained through calculation are both more accurate and more true, which is conducive to the beamforming, thereby enhancing the AAS system performance.

It should be noted that, in a Het-Net network (heterogeneous network, the network includes a plurality of eNodeB nodes) with more frequent occurrence of handover, that the UE reports its three-dimensional coordinate information can assist the eNodeB to perform handover decision and a beamforming during handover, thereby further enhancing the AAS system performance.

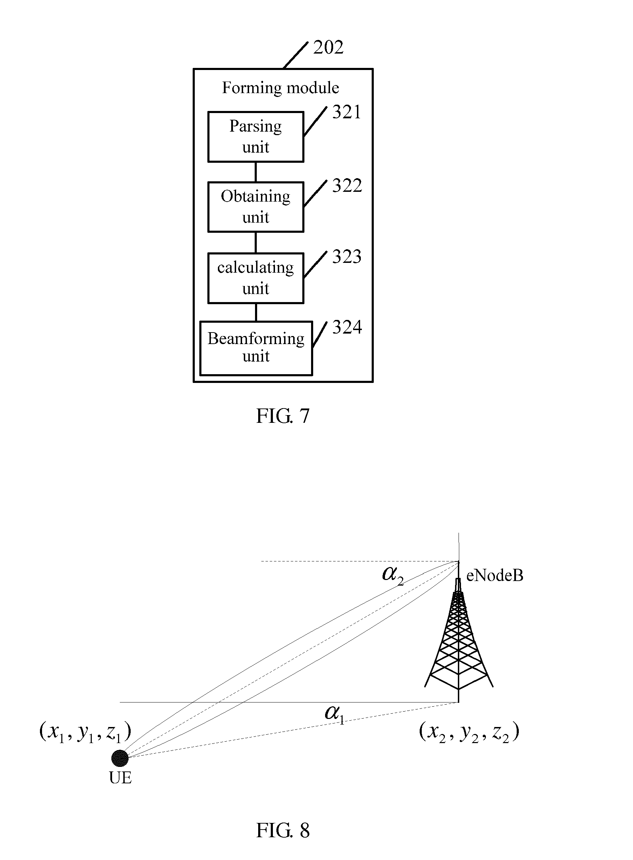

Please see FIG. 7, FIG. 7 is a schematic structural diagram of the forming module shown in FIG. 6 according to an embodiment; the forming module 203 may include:

A parsing unit 321, configured to parse out the three-dimensional coordinate information $(x_1, y_1, z_1)$ of the UE from the measurement report message.

The parsing unit 321 parses out the three-dimensional coordinate information of the UE from the measurement report message returned from the UE, please refer to the prior art for the process of parsing the measurement report message by the parsing unit 321,, which will not be repeated here.

An obtaining unit 322, configured to obtain the three-dimensional coordinate information $(x_2, y_2, z_2)$ of the base station.

The three-dimensional coordinate information of the base station can be preset into the eNodeB by operators, the obtaining unit 322 can directly read the preset three-dimensional coordinate information of the eNodeB. The obtaining unit 322 can also obtain the three-dimensional coordinate information of the eNodeB by measuring the position of the eNodeB, for example: the obtaining unit 322 positions the actual position of the eNodeB by adopting positioning technologies such as GPS, etc., to obtain the three-dimensional coordinate information of the eNodeB, and so on.

A calculating unit 323, configured to calculate the horizontal dimension angle of arrival of the UE relative to the base station according to the formula $\alpha_1 = arctg\left(\dfrac{x_2 - x_1}{y_2 - y_1}\right) + \dfrac{\pi}{2}$, and calculate the vertical dimension angle of arrival of the UE relative to the base station according to the formula $\alpha_2 = \pi - arctg\left(\dfrac{\sqrt{(y_2 - y_1)^2 + (x_2 - x_1)^2}}{z_2 - z_1}\right)$; where

the $\alpha_1$ is the horizontal dimension angle of arrival, the $\alpha_2$ is the vertical dimension angle of arrival.

Please also refer to FIG. 8, FIG. 8 is a schematic diagram of a horizontal dimension AOA and a vertical dimension AOA of a UE relative to a base station according to the present invention. Where, the $\alpha_1$ is the horizontal dimension AOA of the UE relative to the eNodeB, the $\alpha_2$ is the vertical dimension AOA of the UE relative to the eNodeB. The horizontal dimension AOA and the vertical dimension AOA are important parameters of the beamforming, the calculating unit 323 can directly calculate and obtain the $\alpha_1$ and $\alpha_2$ based on the above formulas and according to the three-dimensional coordinate information reported by the UE, so that the parameter values of the beamforming are more accurate, which is conducive to performing the beamforming better.

A beamforming unit 324, configured to perform beamforming on a beam emitted by an AAS antenna array of the base station in horizontal dimension and vertical dimension according to the $\alpha_1$ and $\alpha_2$ which are obtained though calculation of the calculating unit 323.

The beamforming unit 324 performs the beamforming based on the horizontal dimension AOA and the vertical dimension AOA obtained through calculation by the calculating unit 323, and a narrow beam can be obtained. When the eNodeB needs to perform information interaction with the UE, the narrow beam obtained through utilizing the beamforming unit 324 can directly reach the target UE, so that the target user can obtain an accurate beam, thereby improving the communication quality.

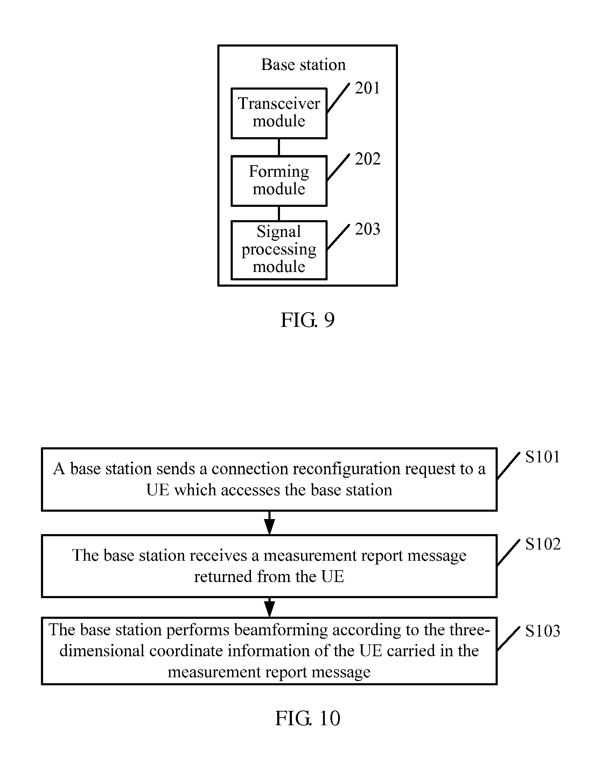

Please see FIG. 9, FIG. 9 is a schematic structural diagram of a base station according to another embodiment of the present invention; the base station may include: a transceiver module 201 and a forming module 202, the base station may further include:

A signal processing module 203, configured to adopt a precoding codebook of the precoding codebook set to process a signal transmitted to the UE, form a beamforming signal, and transmit the beamforming signal to the UE, where the precoding codebook corresponds to the number of horizontal dimension antenna ports in the AAS antenna array and the number of vertical dimension antenna ports in the AAS antenna array; or adopt the precoding codebook corresponding to the number of horizontal dimension antenna ports in the AAS antenna array and the number of vertical dimension antenna ports in the AAS antenna array to parse a signal from the UE.

The connection reconfiguration request sent by the eNodeB to the UE can include an AAS characteristic parameter of the eNodeB, the AAS characteristic parameter can be contained in the antenna information (Antenna Info) of the connection reconfiguration request, the antenna information (Antenna Info) can be contained in physical configuration dedicated information (Physical Config Dedicated information element) of the connection reconfiguration request, regarding the physical configuration dedicated information, the following can be referred to:

```
-- ASN1START
PhysicalConfigDedicated::= SEQUENCE {
 pdsch-ConfigDedicated PDSCH-ConfigDedicated OPTIONAL, --
Need ON
 pucch-ConfigDedicated PUCCH-ConfigDedicated OPTIONAL, --
Need ON
 pusch-ConfigDedicated PUSCH-ConfigDedicated OPTIONAL, --
Need ON
 uplinkPowerControlDedicated UplinkPowerControlDedicated OPTIONAL,
 -- Need ON
 tpc-PDCCH-ConfigPUCCH TPC-PDCCH-Config OPTIONAL,
   -- Need ON
 tpc-PDCCH-ConfigPUSCH TPC-PDCCH-Config OPTIONAL,
   -- Need ON
 cqi-ReportConfig CQI-ReportConfig OPTIONAL, --
Need ON
 soundingRS-UL-ConfigDedicated SoundingRS-UL-ConfigDedicated OPTIONAL, --
Need ON
 antennaInfo CHOICE {
   explicit Value AntennaInfoDedicated,
   defaultValue NULL
 } OPTIONAL, -- Cond
AI-r8
 schedulingRequestConfig SchedulingRequestConfig OPTIONAL,
 -- Need ON
 ...,
 [[ cqi-ReportConfig-v920 CQI-ReportConfig-v920 OPTIONAL, --
Need ON
   antennaInfo-v920 AntennaInfoDedicated-v920 OPTIONAL --
Need ON
 ]],
 [[ antennaInfo-r10 CHOICE {
     explicitValue AntennaInfoDedicated-r10,
     defaultValue NULL
   } OPTIONAL, -- Cond
AI-r10
   cif-Presence BOOLEAN OPTIONAL,-- Need
```

```
ON
      -- FFS whether CSI-RS-Config should be included in physicalConfigDedicated
      cqi-ReportConfig-v10x0 CQI-ReportConfig-v10x0 OPTIONAL, --
Need ON
      csi-RS-Config-r10 CSI-RS-Config-r10 OPTIONAL, --
Need ON
      pucch-ConfigDedicated-v10x0 PUCCH-ConfigDedicated-v10x0 OPTIONAL,
      -- Need ON
      pusch-ConfigDedicated-v10x0 PUSCH-ConfigDedicated-v10x0 OPTIONAL,
      -- Need ON
      schedulingRequestConfig-v10x0 SchedulingRequestConfig-v10x0 OPTIONAL, --
Need ON
      soundingRS-UL-ConfigDedicated-v10x0
                  SoundingRS-UL-ConfigDedicated-v10x0 OPTIONAL,
    -- Need ON
      soundingRS-UL-ConfigDedicatedAperiodic-r10
                  SoundingRS-UL-ConfigDedicatedAperiodic-r10 OPTIONAL,
    -- Need ON
      -- The usage of field soundingRS-UL-ConfigDedicatedAperiodic-r10 is FFS
      ul-AntennaInfo-r10 UL-AntennaInfo-r10 OPTIONAL --
Need ON
    ]]
     [[ antennaInfo-AAS CHOICE {
        explicitValue AntennaInfoDedicated-AAS,
        defaultValue NULL
      } OPTIONAL,
    ]]
}
PhysicalConfigDedicatedSCell-r10::= SEQUENCE {
  -- DL configuration as well as configuration applicable for DL and UL
  nonUL-Configuration SEQUENCE {
      antennaInfo-r10 AntennaInfoDedicated-r10 OPTIONAL,
  -- Need ON
      crossCarrierSchedulingConfig-r10 CrossCarrierSchedulingConfig-r10 OPTIONAL,--
Need ON
      -- FFS whether CSI-RS-Config should be included in physicalConfigDedicated
      csi-RS-Config-r10 CSI-RS-Config-r10 OPTIONAL,--
Need ON
      pdsch-ConfigDedicated-r10 PDSCH-ConfigDedicated OPTIONAL --
Need ON
    } OPTIONAL, -- Cond
SCellAdd
  -- UL configuration
  ul-Configuration CHOICE {
      release NULL,
      setup SEQUENCE {
        pusch-ConfigDedicated-r10 PUSCH-ConfigDedicated OPTIONAL,--
Need ON
        pusch-ConfigDedicated-v10x0 PUSCH-ConfigDedicated-v10x0
    OPTIONAL,-- Need ON
        uplinkPowerControlDedicated-r10 UplinkPowerControlDedicatedSCell-r10
    OPTIONAL,-- Need ON
        -- FFS if (part of) tpc-PDCCH-ConfigPUSCH is needed
        cqi-ReportConfig-r10 CQI-ReportConfigSCell-r10 OPTIONAL,-- Need
ON
        soundingRS-UL-ConfigDedicated-r10 SoundingRS-UL-ConfigDedicatedOPTIONAL,
    -- Need ON
        soundingRS-UL-ConfigDedicated-v10x0
                  SoundingRS-UL-ConfigDedicated-v10x0 OPTIONAL,
    -- Need ON
        soundingRS-UL-ConfigDedicatedAperiodic-r10
                  SoundingRS-UL-ConfigDedicatedAperiodic-r10 OPTIONAL,
    -- Need ON
```

```
     -- The usage of field soundingRS-UL-ConfigDedicatedAperiodic-r10 is FFS
     ul-AntennaInfo-r10 UL-AntennaInfo-r10 OPTIONAL --
 Need ON
     }
   } OPTIONAL,
  -- Need ON
  }
   -- ASN1STOP
}
```

Regarding the antenna information contained in the physical configuration dedicated information, the following can be referred to:

```
-- ASN1START
 AntennaInfoCommon::= SEQUENCE {
   antennaPortsCount ENUMERATED {an1, an2, an4, spare1}
 }
AntennaInfoDedicated::= SEQUENCE {
  transmissionMode ENUMERATED {
                    tm1, tm2, tm3, tm4, tm5, tm6,
                    tm7, tm8-v920},
  codebookSubsetRestriction CHOICE {
    n2TxAntenna-tm3 BIT STRING (SIZE (2)),
    n4TxAntenna-tm3 BIT STRING (SIZE (4)),
    n2TxAntenna-tm4 BIT STRING (SIZE (6)),
    n4TxAntenna-tm4 BIT STRING (SIZE (64)),
    n2TxAntenna-tm5 BIT STRING (SIZE (4)),
    n4TxAntenna-tm5 BIT STRING (SIZE (16)),
    n2TxAntenna-tm6 BIT STRING (SIZE (4)),
    n4TxAntenna-tm6 BIT STRING (SIZE (16))
   } OPTIONAL, -- Cond
TM
  ue-TransmitAntennaSelection CHOICE {
    release NULL,
    setup ENUMERATED {closedLoop, openLoop}
   }
}
  AntennaInfoDedicated-v920::= SEQUENCE {
  codebookSubsetRestriction-v920 CHOICE {
    n2TxAntenna-tm8-r9 BIT STRING (SIZE (6)),
    n4TxAntenna-tm8-r9 BIT STRING (SIZE (32))
   } OPTIONAL -- Cond
  TM8
}
AntennaInfoDedicated-r10::= SEQUENCE {
  -- FFS if AntennaInfoDedicatedSCell should be introduced
   transmissionMode-r10 ENUMERATED {
                    tm1, tm2, tm3, tm4, tm5, tm6, tm7, tm8-v920,
                     tm9-v10x0, spare7, spare6, spare5, spare4,
                     spare3,spare2, spare1},
  codebookSubsetRestriction-r10 CHOICE {
    n2TxAntenna-tm3 BIT STRING (SIZE (2)),
    n4TxAntenna-tm3 BIT STRING (SIZE (4)),
    n2TxAntenna-tm4 BIT STRING (SIZE (6)),
    n4TxAntenna-tm4 BIT STRING (SIZE (64)),
    n2TxAntenna-tm5 BIT STRING (SIZE (4)),
    n4TxAntenna-tm5 BIT STRING (SIZE (16)),
    n2TxAntenna-tm6 BIT STRING (SIZE (4)),
    n4TxAntenna-tm6 BIT STRING (SIZE (16)),
    n2TxAntenna-tm8-r9 BIT STRING (SIZE (6)),
    n4TxAntenna-tm8-r9 BIT STRING (SIZE (32)),
    n2TxAntenna-tm9-r10 BIT STRING (SIZE (6)),
    n4TxAntenna-tm9-r10 BIT STRING (SIZE (64)),
```

```
   nBTxAntenna-tm9-r10 BIT STRING (SIZE (1)), -- Size bit
string FFS
   ...
   } OPTIONAL, -- Cond
 TMX
 ue-TransmitAntennaSelection-r10 CHOICE{
   release NULL,
   setup ENUMERATED {closedLoop, openLoop}
   }
}
 AntennaInfoDedicated-AAS::= SEQUENCE {
  horizontalantennaPortsCount ENUMERATED {an1, an2, an4, spare1}
  VerticalantennaPortsCount ENUMERATED {an1, an2, spare1}
  codebookSubsetRestriction-AAS CHOICE {
   n2Tx_n1vTxAntenna-tmX BIT STRING (SIZE (xx)),
   n4Tx_n1vTxAntenna-tmX BIT STRING (SIZE (xx)),
   ...
   } OPTIONAL -- Cond
 TMX
}
-- ASN1STOP
```

If the UE is a UE of R10 (release 10, release 10) or lower than R10, the UE may obtain the number of horizontal dimension antenna ports in the AAS antenna array through reading "antennaPortsCount" in the above antenna information, and in this case it can be considered that the vertical dimension antenna port in the AAS antenna array AAS is not used (i.e., considering that the number of vertical dimension antenna port in the AAS antenna array is 0), so that the AAS antenna configuration can be determined, the antenna configuration is mainly determined according to the number of horizontal dimension antenna ports in the AAS antenna array. If the UE is a UE later than R10, the UE not only can determine the AAS antenna configuration through reading the "antennaPortsCount" in the antenna information, but also can obtain the number of horizontal dimension antenna ports in the AAS antenna array through reading "horizontalantennaPortsCount" in the antenna information and obtain the number of vertical dimension antenna ports in the AAS antenna array through reading "VerticalantennaPortsCount" in the antenna information, so that the AAS antenna configuration can be determined. In this case, the AAS antenna configuration is determined jointly according to the number of horizontal dimension antenna ports and the number of vertical dimension antenna ports in the AAS antenna array, such determined AAS antenna configuration can reflect the antenna mode form of the AAS more accurately than the AAS antenna configuration determined through directly reading the "antennaPortsCount". The UE can further obtain a precoding codebook set corresponding to a variety of AAS antenna configuration from the connection reconfiguration request sent by the eNodeB, or, the UE can store the precoding codebook set corresponding to a variety of AAS antenna configuration in advance, and select the precoding codebook corresponding to the AAS antenna configuration after determining the AAS antenna configuration of the eNodeB.

After the beamforming, high quality information interaction can be performed between the eNodeB and the UE: when the eNodeB needs to transmit a signal to the UE, the signal processing module 203 can adopt the precoding codebook corresponding to the number of horizontal dimension antenna ports in the AAS antenna array and the number of vertical dimension antenna ports in the AAS antenna array (i.e. AAS antenna configuration) to process the transmission signal, form a beamforming signal and transmit to the UE, the UE can use the same precoding codebook as that of the eNodeB (i.e. the precoding codebook corresponding to the number of horizontal dimension antenna ports in the AAS antenna array and the number of vertical dimension antenna ports in the AAS antenna array) to parse the beamforming signal from the eNodeB. When the UE needs to transmit a signal to the eNodeB, the UE can use the precoding codebook corresponding to the number of horizontal dimension antenna ports in the AAS antenna array and the number of vertical dimension antenna ports in the AAS antenna array to process the transmission signal and then transmit to the eNodeB, the signal processing module 203 can use the same precoding codebook as that of the UE to parse the signal from the UE.

In the embodiments of the present invention, the base station performs beamforming performs beamforming according to the three-dimensional coordinate information reported by the UE which accesses the base station. Since the beamforming is no longer simply based on the results of the horizontal dimension AOA of the UE estimated by the base station, but based on the three-dimensional coordinate information reported by the UE, the horizontal dimension AOA and the vertical dimension AOA of the UE relative to the base station are sufficiently considered, so that the base station can provide a more effective and more accurate beam to the UE, thereby improving the communication service quality and enhancing the performance of the wireless communication system.

Corresponding to the UE described in any of the above embodiments of FIG. 3- FIG. 5, and the base station described in any of the above embodiments of FIG. 6- FIG. 9, an AAS-based method for information interaction provided by embodiments of the present invention is described in the following in details with reference to FIG. 10- FIG. 14, the UEs and the base stations of the above embodiments each can be applied to the following method embodiments.

Please see FIG. 10, FIG. 10 is a flowchart of an AAS-based method for information interaction according to an embodiment of the present invention; the method can include:

S101, a base station sends a connection reconfiguration request to a user equipment UE which accesses the base station.

In the AAS, information interaction is performed between the eNodeB and the UE based on the RRC protocol. In step S101, after the UE successfully accesses the eNodeB, the eNodeB sends the connection reconfiguration request to the UE, where the connection reconfiguration request can include: measurement configuration information, the measurement configuration information can carry the information which is used to request the UE to report three-dimensional coordinates of the UE, so as to request the UE to report the three-dimensional coordinate information of the UE after receiving the connection reconfiguration request.

S102, the base station receives a measurement report message returned from the UE, where the measurement report message carries three-dimensional coordinate information of the UE.

In response to the connection reconfiguration request of the eNodeB, the UE can report the three-dimensional coordinate information of the UE to the eNodeB through the measurement report message. In step S102, the eNodeB receives the measurement report message returned from the UE, where the measurement report message carries the three-dimensional coordinate information of the UE, the three-dimensional coordinate information can be the measurement results obtained by the UE based on positioning technologies, such as GPS, etc.

S103, the base station performs beamforming according to the three-dimensional coordinate information of the UE carried in the measurement report message.

In step S103, the eNodeB may calculate and obtain the horizontal dimension AOA and vertical dimension AOA of the UE relative to the eNodeB according to the three-dimensional coordinate information of the UE. The horizontal dimension AOA and vertical dimension AOA are important parameters of the beamforming, the eNodeB can perform self-adaptive adjustment and beamforming based on the two parameter values obtained through calculation, so as to provide a more effective and more accurate beam to the UE.

Because of the complexity of the radio environment, if the eNodeB performs the beamforming based on the estimation of the horizontal dimensional AOA of the UE, there is usually a deviation for the estimation result, thus it is impossible for the eNodeB to provide a more effective and more accurate beam to the UE, not only cannot the target user equipment obtain relatively high service quality, but also the interference may be caused to other user equipments, thereby reducing the performance of the wireless communication system. In the embodiments of the present invention, the eNodeB calculates and obtains the horizontal dimensional AOA and the vertical dimensional AOA of the UE relative to the eNodeB based on the three-dimensional coordinate information reported by the UE, and performs beamforming on this basis, whether in a simple propagation environment, such as an application scenario of a square, etc.; or in a complex propagation environment, such as an application scenario obscured by buildings, the horizontal dimensional AOA and the vertical dimensional AOA values obtained through calculation are both more accurate and more true, which is conducive to the beamforming, thereby enhancing the AAS system performance.

It should be noted that, in a Het-Net network (heterogeneous network, the network includes a plurality of eNodeB nodes) with more frequent occurrence of handover, that the UE reports its three-dimensional coordinate information can assist the eNodeB to perform a handover decision and the beamforming during handover, thereby further enhancing the AAS system performance.

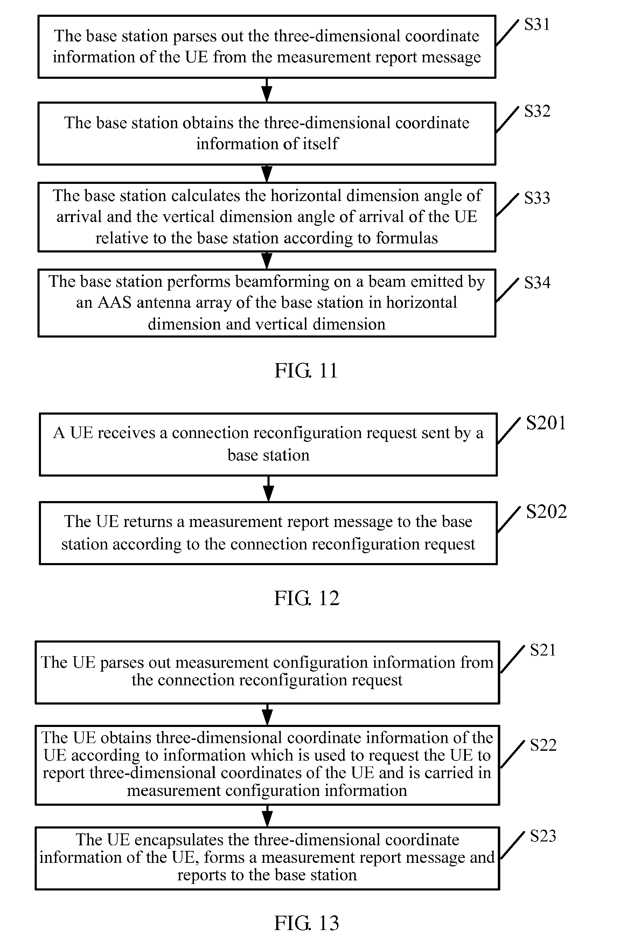

Please see FIG. 11, FIG. 11 is a flowchart of step S 103 shown in FIG. 10 according to an embodiment; the step S103 can include:

S31, the base station parses out the three-dimensional coordinate information $(x_1, y_1, z_1)$ of the UE from the measurement report message.

In step S31, the eNodeB parses out the three-dimensional coordinate information of the UE from the measurement report message returned from the UE, please refer to the prior art for the process of parsing the measurement report message by the eNodeB, , which will not be repeated here.

S32, the base station obtains three-dimensional coordinate information $(x_2, y_2, z_2)$ of itself.

The three-dimensional coordinate information of the eNodeB may be preset into the eNodeB by operators, in step S32, the eNodeB can directly read the preset three-dimensional coordinate information of the eNodeB, and can also obtain the three-dimensional coordinate information of the eNodeB by measuring the position of the eNodeB, for example: positioning the actual position of the eNodeB by adopting positioning technologies such as GPS, etc., to obtain the three-dimensional coordinate information of the eNodeB, and so on.

S33, the base station calculates the horizontal dimension angle of arrival of the UE relative to the base station according to the formula $\alpha_1 = arctg\left(\dfrac{x_2 - x_1}{y_2 - y_1}\right) + \dfrac{\pi}{2}$, and calculates the vertical dimension angle of arrival of the UE relative to the base station according to the formula $\alpha_2 = \pi - arctg\left(\dfrac{\sqrt{(y_2 - y_1)^2 + (x_2 - x_1)^2}}{z_2 - z_1}\right)$; where the $\alpha_1$

is the horizontal dimension angle of arrival, the $\alpha_2$ is the vertical dimension angle of arrival.

Please also refer to FIG. 8, the $\alpha_1$ shown in FIG. 8 is the horizontal dimension AOA of the UE relative to the eNodeB, the $\alpha_2$ is the vertical dimension AOA of the UE relative to the eNodeB. The horizontal dimension AOA and the vertical dimension AOA are important parameters of the beamforming, in step S33, the eNodeB can directly calculate and obtain the $\alpha_1$ and $\alpha_2$ based on the above formulas and according to the three-dimensional coordinate information reported by the UE, so that the parameter values of the beamforming are more accurate, which is conducive to performing the beamforming better.

S34, the base station performs beamforming on a beam emitted by an AAS antenna array of the base station in horizontal dimension and vertical dimension according to the $\alpha_1$ and $\alpha_2$.

In step S34, the eNodeB performs the beamforming based on the horizontal dimension AOA and the vertical dimension AOA obtained through calculation, and a narrow beam can be obtained. When the eNodeB needs to perform information interaction with the UE, the narrow beam obtained by utilizing the beamforming can directly reach the target UE, so that the target user can obtain an accurate beam, thereby improving the communication quality.

It should be noted that, after the beamforming, high quality information interaction can be performed between the eNodeB and the UE: the eNodeB can use the precoding codebook corresponding to the number of horizontal dimension antenna ports in the AAS antenna array and the number of vertical dimension antenna ports in the AAS antenna array to process a signal transmitted to the UE into a beamforming signal; or use the precoding codebook corresponding to the number of horizontal dimension antenna ports in the AAS antenna array and the number of vertical dimension antenna ports in the AAS antenna array to parse a signal from the UE.

Please see FIG. 12, FIG. 12 is a flowchart of an AAS-based method for information interaction according to another embodiment of the present invention; the method can include:

S201, a UE receives a connection reconfiguration request sent by a base station.

In the AAS, information interaction is performed between the eNodeB and the UE based on the RRC protocol. After the UE successfully accesses a certain serving eNodeB, the eNodeB can send the connection reconfiguration request to the UE. Where the connection reconfiguration request can include: measurement configuration (MeasConfig) information, the measurement configuration information can carry the information which is used to request the UE to report the three-dimensional coordinates of the UE, so as to request the UE to report the three-dimensional coordinate information of the UE after receiving the connection reconfiguration request. In step S201, the UE receives the connection reconfiguration request sent by the eNodeB.

S202, the UE returns a measurement report message to the base station according to the connection reconfiguration request, where the measurement report message carries three-dimensional coordinate information of the UE, so that the base station performs beamforming according to the three-dimensional coordinate information of the UE carried in the measurement report message.

In step S202, the UE can report the three-dimensional coordinate information of the UE to the eNodeB through the measurement report message, so as to respond to the connection reconfiguration request sent by the eNodeB. The three-dimensional coordinate information of the UE can be used for the beamforming of the eNodeB, so that the eNodeB can provide a more effective and more accurate beam to the UE.

Please see FIG. 13, FIG. 13 is a flowchart of step S202 shown in FIG. 12 according to an embodiment; the step S202 can include:

S21, the UE parses out measurement configuration information from the connection reconfiguration request.

The connection reconfiguration request sent by the eNodeB can contain measurement configuration information. In step S21, the UE can parse out the measurement configuration information from the connection reconfiguration request, please refer to the process of parsing, by the UE, the signaling message sent by the eNodeB in the prior art for the specific parsing process, which will not be repeated here.

S22, the UE obtains the three-dimensional coordinate information of the UE according to the information which is used to request the UE to report the three-dimensional coordinates of the UE and is carried in the measurement configuration information.

With the development of GPS, GPS is more and more widely applied in the UE, and is more and more frequently used, for example: the UE may contain a GPS module, the GPS module can achieve the positioning of the UE, and provide the three-dimensional coordinate information of the UE. In step S22, the UE may use the GPS module in the UE to obtain the three-dimensional coordinate information ($x_1$, $y_1$, $z_1$) of the UE. It should be noted that, with the development of positioning technologies, the UE may also use other positioning technologies to obtain three-dimensional coordinate information of the UE, for example: obtaining the three-dimensional coordinate information of the UE based on assistant positioning of the base station, etc.

S23, the UE encapsulates the three-dimensional coordinate information of the UE, forms a measurement report message and reports it to the base station.

In step S23, the UE encapsulates the obtained three-dimensional coordinate information of the UE and forms the measurement report message. It can be understood that, the three-dimensional coordinate information of the UE contained in the measurement report message is a response to the information which is used to request the UE to report the three-dimensional coordinates of the UE and is carried in the measurement configuration information is contained in the connection reconfiguration request sent by the eNodeB. The UE reports the measurement report message carrying the three-dimensional coordinate information of the UE to the eNodeB, so that the eNodeB can perform beamforming according to the three-dimensional coordinate information of the UE carried in the measurement report message, thus the eNodeB can provide a more effective and more accurate beam to the UE.

It should be noted that, after the beamforming, high quality information interaction can be performed between the UE and the eNodeB: the UE can use a precoding codebook corresponding to the number of horizontal dimension antenna ports in the AAS antenna array and the number of vertical dimension antenna ports in the AAS antenna array to parse a beamforming signal from the eNodeB; or use the precoding codebook corresponding to the number of horizontal dimension antenna ports in the AAS antenna array and the number of vertical dimension antenna ports in the AAS antenna array to process a signal transmitted to the eNodeB.

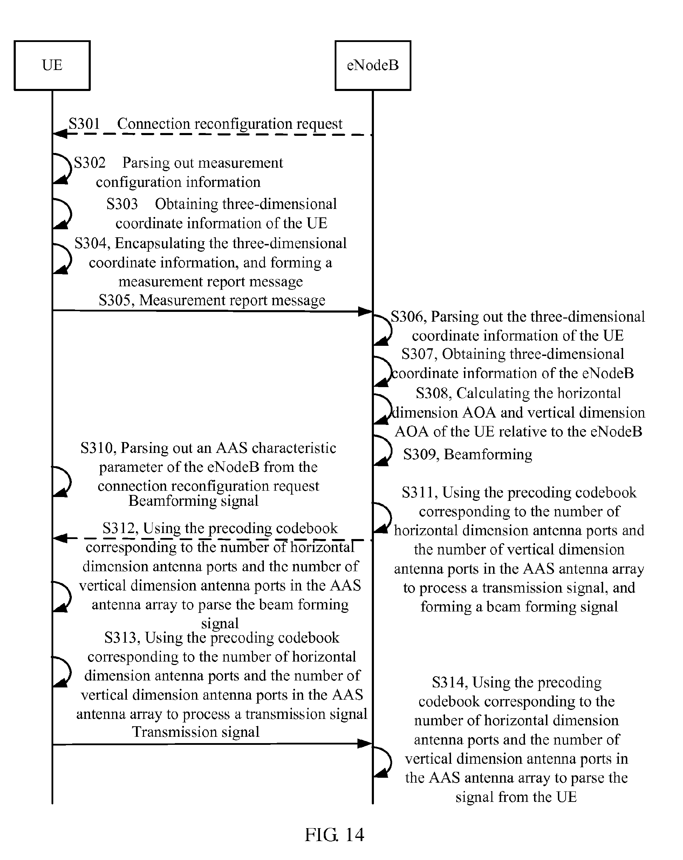

Please see FIG. 14, FIG. 14 is a flowchart of an AAS-based method for information interaction according to another embodiment of the present invention; the method may include:

S301, an eNodeB sends a connection reconfiguration request to a UE which accesses the eNodeB.

Please refer to step S101 shown in FIG. 10 for step S301 of this embodiment, which will not be repeated here.

S302, the UE parses out measurement configuration information from the connection reconfiguration request sent by the eNodeB.

S303, the UE obtains three-dimensional coordinate information of the UE according to a request for three-dimensional coordinates in the measurement configuration information.

S304, the UE encapsulates the three-dimensional coordinate information of the UE, forms a measurement report message and reports it to the eNodeB.

Please refer to step S21- step S23 shown in FIG. 13 for step S302- step S304 of this embodiment, which will not be repeated here.

S305, the eNodeB receives the measurement report message returned from the UE, where the measurement report message carries the three-dimensional coordinate information of the UE.

S306, the eNodeB parses out the three-dimensional coordinate information ($x_1$, $y_1$, $z_1$) of the UE from the measurement report message.

S307, the eNodeB obtains three-dimensional coordinate information ($x_2$, $y_2$, $z_2$) of the eNodeB.

S308, the eNodeB calculates a horizontal dimension angle of arrival of the UE relative to the eNodeB according

to the formula $\alpha_1 = arctg\left(\dfrac{x_2 - x_1}{y_2 - y_1}\right) + \dfrac{\pi}{2}$ , and calculates a vertical dimension angle of arrival of the UE relative to the eNodeB according to the formula $\alpha_2 = \pi - arctg\left(\dfrac{\sqrt{(y_2 - y_1)^2 + (x_2 - x_1)^2}}{z_2 - z_1}\right)$.

S309, the eNodeB performs beamforming on a beam emitted by an AAS antenna array of the eNodeB in horizontal dimension and vertical dimension according to the $\alpha_1$ and $\alpha_2$.

Please refer to step S31- step S34 shown in FIG. 11 for step S306- step S309 of this embodiment, which will not be repeated here.

S310, the UE parses out an AAS characteristic parameter of the eNodeB from the connection reconfiguration request sent by the eNodeB.

The connection reconfiguration request sent by the eNodeB can include the AAS characteristic parameter of the eNodeB, the AAS characteristic parameter can be contained in the antenna information in the connection reconfiguration request. In step S310, if the UE is a UE of R10 (release 10, release 10) or lower than R10, the UE can obtain the number of horizontal dimension antenna ports in the AAS antenna array through reading "antennaPortsCount" in the above antenna information, in this case it can be considered that the vertical dimension antenna port in the AAS antenna array AAS is not used (i.e., considering that the number of vertical dimension antenna port in the AAS antenna array is 0), so that the AAS antenna configuration can be determined, the antenna configuration is mainly determined according to the number of horizontal dimension antenna ports in the AAS antenna array. If the UE is a UE later than R10, the UE not only can determine the AAS antenna configuration through reading the "antennaPortsCount" in the antenna information, but also can obtain the number of horizontal dimension antenna ports in the AAS antenna array through reading "horizontalantennaPortsCount" in the antenna information; obtain the number of vertical dimension antenna ports in the AAS antenna array through reading "VerticalantennaPortsCount" in the antenna information, so as to determine the AAS antenna configuration. In this case, the AAS antenna configuration is determined jointly according to the number of horizontal dimension antenna ports and the number of vertical dimension antenna ports in the AAS antenna array, such determined AAS antenna configuration can reflect the antenna mode form of the AAS more accurately than the AAS antenna configuration determined through directly reading the "antennaPortsCount". In this step, the UE can further obtain a precoding codebook set corresponding to a variety of AAS antenna configuration from the connection reconfiguration request sent by the eNodeB, or, the UE can store the precoding codebook set corresponding to a variety of AAS antenna configuration in advance, and select the precoding codebook corresponding to the AAS antenna configuration after determining the AAS antenna configuration of the eNodeB. Through the above process, the UE can obtain the AAS characteristic parameter. It should be noted that, this step S310 and step S302 are executed in no particular order, for example, step S310 can be executed at first, and then step S302 is executed; or step S310 and step S302 are executed simultaneously.

S311, the eNodeB uses the precoding codebook corresponding to the number of horizontal dimension antenna ports in the AAS antenna array and the number of vertical dimension antenna ports in the AAS antenna array to process a transmission signal, forms a beamforming signal and transmits to the UE.

S312, the UE uses the precoding codebook corresponding to the number of horizontal dimension antenna ports in the AAS antenna array and the number of vertical dimension antenna ports in the AAS antenna array to parse the beamforming signal from the eNodeB.

S313, the UE uses the precoding codebook corresponding to the number of horizontal dimension antenna ports in the AAS antenna array and the number of vertical dimension antenna ports in the AAS antenna array to process a transmission signal.

S314, the eNodeB uses the precoding codebook corresponding to the number of horizontal dimension antenna ports in the AAS antenna array and the number of vertical dimension antenna ports in the AAS antenna array to parses the signal from the UE.

After the beamforming, high quality information interaction can be performed between the eNodeB and the UE, please refer to step S311- step S314 for its interaction process, in step S311- step S314, the eNodeB and the UE use the same precoding codebook to process transmission signals and received signals, which can guarantee the communication quality, and enhance the AAS system performance.

Through the descriptions of the above embodiments, the embodiments of the present invention can achieve the following beneficial effects:

(1) The base station performs beamforming performs beamforming according to the three-dimensional coordinate information reported by the UE which accesses the base station, since the beamforming is no longer simply based on the results of the horizontal dimension AOA of the UE estimated by the base station, but based on the three-dimensional coordinate information reported by the UE, the horizontal dimension AOA and the vertical dimension AOA of the UE relative to the base station are sufficiently considered, so that the base station can provide a more effective and more accurate beam to the UE, thereby improving the communication service quality and enhancing the performance of the wireless communication system.

(2) Because of the complexity of the radio environment, there is usually a deviation for the result of the horizontal dimensional AOA of the UE estimated by the eNodeB, the beamforming on this basis not only cannot make the target user equipment obtain relatively high service quality, but also may cause the interference to other user equipments, thereby reducing the performance of the wireless communication system. The beamforming based on the estimation results of the eNodeB is avoided in the embodiments of the present invention, the horizontal dimensional AOA and the vertical dimensional AOA of the UE relative to the eNodeB are obtained through calculation according to the three-dimensional coordinate information reported by the UE, and the beamforming is performed on this basis, whether in a simple propagation environment, such as an application scenario of a square, etc.; or in a complex propagation environment, such as an application scenario obscured by buildings, the horizontal dimensional AOA and the vertical dimensional AOA values obtained through calculation are both relatively accurate and true, which is conducive to the beamforming, thereby enhancing the AAS system performance.

Those skilled in the art may understand that all or part of the procedures in the methods of the embodiments can be implemented by hardware under the instruction of a computer program, the program may be stored in a computer readable storage medium and when the program is executed, the procedures in the methods of the embodiments can be performed. Where, the storage medium may be a magnetic disk, an optical disk, read-only memory (Read-Only Memory, ROM) or random access memory (Random Access Memory, RAM), etc.

The above disclosed are only preferred embodiments of the present invention, however the scope of rights of the present invention is not limited to this, those skilled in the art may understand all or part of the procedures in the methods of the embodiments, and make equivalent modifications according to the claims of the present invention, where all equivalent modifications or replacements should fall within the scope of the present invention.

**Claims**

1. An advanced antenna system AAS-based method for information interaction, **characterized by** comprising:

   sending, by a base station, a connection reconfiguration request to a user equipment UE which accesses the base station, and receiving a measurement report message returned from the UE, wherein the measurement report message carries three-dimensional coordinate information of the UE;
   performing, by the base station, beamforming according to the three-dimensional coordinate information of the UE carried in the measurement report message.

2. The method according to claim 1, wherein the connection reconfiguration request comprises:

   measurement configuration information, the measurement configuration information carries information which is used to request the UE to report three-dimensional coordinates of the UE.

3. The method according to claim 1 or 2, wherein the performing, by the base station, the beamforming according to the three-dimensional coordinate information of the UE carried in the measurement report message, comprises:

   parsing out, by the base station, the three-dimensional coordinate information $(x_1, y_1, z_1)$ of the UE from the measurement report message;
   obtaining, by the base station, three-dimensional coordinate information $(x_2, y_2, z_2)$ of itself;
   calculating, by the base station, a horizontal dimension angle of arrival of the UE relative to the base station according to a formula $\alpha_1 = arctg\left(\dfrac{x_2 - x_1}{y_2 - y_1}\right) + \dfrac{\pi}{2}$ , and calculating a vertical dimension angle of arrival of the UE relative to the base station according to a formula $\alpha_2 = \pi - arctg\left(\dfrac{\sqrt{(y_2 - y_1)^2 + (x_2 - x_1)^2}}{z_2 - z_1}\right)$,

   wherein the $\alpha_1$ is the horizontal dimension angle of arrival, the $\alpha_2$ is the vertical dimension angle of arrival;
   performing, by the base station, beamforming on a beam emitted by an AAS antenna array of the base station in horizontal dimension and vertical dimension according to the $\alpha_1$ and $\alpha_2$.

4. The method according to claim 1, wherein the connection reconfiguration request comprises an AAS characteristic parameter of the base station;
   the AAS characteristic parameter of the base station comprises: a number of horizontal dimension antenna ports in the AAS antenna array, a number of vertical dimension antenna ports in the AAS antenna array, and a precoding codebook set.

5. The method according to claim 4, wherein after the performing, by the base station, the beamforming according to the three-dimensional coordinate information of the UE carried in the measurement report message, the method further comprises:

   using, by the base station, a precoding codebook of the precoding codebook set to process a signal transmitted to the UE, forming a beamforming signal, and transmitting the beamforming signal to the UE, wherein the precoding codebook corresponds to the number of horizontal dimension antenna ports in the AAS antenna array and the number of vertical dimension antenna ports in the AAS antenna array; or, using, by the base station, the precoding codebook corresponding to the number of horizontal dimension antenna ports in the AAS antenna array and the number of vertical dimension antenna ports in the AAS antenna array to parse a signal from the UE.

**6.** An AAS-based method for information interaction, **characterized by** comprising:

receiving, by a UE, a connection reconfiguration request sent by a base station, and returning a measurement report message to the base station according to the connection reconfiguration request, wherein the measurement report message carries three-dimensional coordinate information of the UE, so that the base station performs beamforming according to the three-dimensional coordinate information of the UE carried in the measurement report message.

**7.** The method according to claim 6, wherein the connection reconfiguration request comprises:

measurement configuration information, the measurement configuration information carries information which is used to request the UE to report three-dimensional coordinates of the UE.

**8.** The method according to claim 7, wherein the returning, by the UE, the measurement report message to the base station according to the connection reconfiguration request, comprises:

parsing out, by the UE, the measurement configuration information from the connection reconfiguration request; obtaining, by the UE, the three-dimensional coordinate information of the UE according to the information which is used to request the UE to report the three-dimensional coordinates of the UE and is carried in the measurement configuration information; encapsulating, by the UE, the three-dimensional coordinate information of the UE, forming the measurement report message and reporting to the base station.

**9.** The method according to any one of claims 6-8, wherein the connection reconfiguration request comprises an AAS characteristic parameter of the base station; the AAS characteristic parameter of the base station comprises: a number of horizontal dimension antenna ports in the AAS antenna array, a number of vertical dimension antenna ports in the AAS antenna array, and a precoding codebook set.

**10.** The method according to claim 9, wherein after the returning, by the UE, the measurement report message to the base station according to the connection reconfiguration request, the method further comprises:

parsing out, by the UE, the AAS characteristic parameter of the base station from the connection reconfiguration request; selecting, by the UE, according to the number of horizontal dimension antenna ports in the AAS antenna array and the number of vertical dimension antenna ports in the AAS antenna array which are contained in the AAS characteristic parameter of the base station, from the precoding codebook set in the AAS characteristic parameter of the base station, a precoding codebook corresponding to the number of horizontal dimension antenna ports in the AAS antenna array and the number of vertical dimension antenna ports in the AAS antenna array, to parse a beamforming signal from the base station; or selecting, by the UE, according to the number of horizontal dimension antenna ports in the AAS antenna array and the number of vertical dimension antenna ports in the AAS antenna array which are contained in the AAS characteristic parameter of the base station, from the precoding codebook set in the AAS characteristic parameter of the base station, the precoding codebook corresponding to the number of horizontal dimension antenna ports in the AAS antenna array and the number of vertical dimension antenna ports in the AAS antenna array, to process a signal transmitted to the base station.

**11.** A user equipment UE, **characterized by** comprising:

a request receiving module, configured to receive a connection reconfiguration request sent by a base station; a message returning module, configured to return a measurement report message to the base station according to the connection reconfiguration request received by the request receiving module, wherein the measurement report message carries three-dimensional coordinate information of the UE, so that the base station performs beamforming according to the three-dimensional coordinate information of the UE carried in the measurement report message.

**12.** The UE according to claim 11, wherein the connection reconfiguration request comprises:

measurement configuration information, the measurement configuration information carries information which is used to request the UE to report three-dimensional coordinates of the UE.

13. The UE according to claim 12, wherein the message returning module comprises:

a message parsing unit, configured to parse out the measurement configuration information from the connection reconfiguration request received by the request receiving module;

an obtaining unit, configured to obtain the three-dimensional coordinate information of the UE according to the information which is used to request the UE to report the three-dimensional coordinates of the UE and is carried in the measurement configuration information obtained through parsing by the message parsing unit;

a message generating unit, configured to encapsulate the three-dimensional coordinate information of the UE, and form the measurement report message;

a returning unit, configured to report the measurement report message generated by the message generating unit to the base station.

14. The UE according to any one of claims 11-13, wherein the connection reconfiguration request comprises an AAS characteristic parameter of the base station;

the AAS characteristic parameter of the base station comprises: a number of horizontal dimension antenna ports in the AAS antenna array, a number of vertical dimension antenna ports in the AAS antenna array, and a precoding codebook set.

15. The UE according to claim 14, further comprising:

a parsing module, configured to parse out the AAS characteristic parameter of the base station from the connection reconfiguration request received by the request receiving module;

a signal processing module, configured to select, according to the number of horizontal dimension antenna ports in the AAS antenna array and the number of vertical dimension antenna ports in the AAS antenna array which are obtained by the parsing module, from the precoding codebook set in the AAS characteristic parameter of the base station, a precoding codebook corresponding to the number of horizontal dimension antenna ports in the AAS antenna array and the number of vertical dimension antenna ports in the AAS antenna array, to parse a beamforming signal from the base station; or select, according to the number of horizontal dimension antenna ports in the AAS antenna array and the number of vertical dimension antenna ports in the AAS antenna array which are contained in the AAS characteristic parameter of the base station, from the precoding codebook set of the AAS characteristic parameter of the base station, the precoding codebook corresponding to the number of horizontal dimension antenna ports in the AAS antenna array and the number of vertical dimension antenna ports in the AAS antenna array, to process a signal transmitted to the base station.

16. A base station, wherein the base station is provided with an ASS, the base station further comprises:

a transceiver module, configured to send a connection reconfiguration request to a UE which accesses the base station, and receive a measurement report message returned from the UE, wherein the measurement report message carries three-dimensional coordinate information of the UE;

a forming module, configured to perform beamforming according to the three-dimensional coordinate information of the UE carried in the measurement report message received by the transceiver module.

17. The base station according to claim 16, wherein the connection reconfiguration request comprises: measurement configuration information, the measurement configuration information carries information which is used to request the UE to report three-dimensional coordinates of the UE.

18. The base station according to claim 17, wherein the forming module comprises:

a parsing unit, configured to parse out the three-dimensional coordinate information $(x_1, y_1, z_1)$ of the UE from the measurement report message;

an obtaining unit, configured to obtain three-dimensional coordinate information $(x_2, y_2, z_2)$ of the base station;

a calculating unit, configured to calculate a horizontal dimension angle of arrival of the UE relative to the base station according to a formula $\alpha_1 = arctg\left(\dfrac{x_2 - x_1}{y_2 - y_1}\right) + \dfrac{\pi}{2}$, and calculate a vertical dimension angle of arrival of the UE relative to the base station according to a formula

$$\alpha_2 = \pi - arctg\left(\frac{\sqrt{(y_2 - y_1)^2 + (x_2 - x_1)^2}}{z_2 - z_1}\right); \text{ wherein the } \alpha_1 \text{ the horizontal dimension angle of arrival,}$$

the $\alpha_2$ is the vertical dimension angle of arrival;

a beam performing unit, configured to perform beamforming on a beam emitted by an AAS antenna array of the base station in horizontal dimension and vertical dimension according to the $\alpha_1$ and $\alpha_2$.

19. The base station according to any one of claims 16-18, wherein the connection reconfiguration request comprises an AAS characteristic parameter of the base station;

the AAS characteristic parameter of the base station comprises: a number of horizontal dimension antenna ports in the AAS antenna array, a number of vertical dimension antenna ports in the AAS antenna array, and a precoding codebook set.

20. The base station according to claim 19, further comprising:

a signal processing module, configured to use a precoding codebook of the precoding codebook set to process a signal transmitted to the UE, form a beamforming signal, and transmit the beamforming signal to the UE, wherein the precoding codebook corresponds to the number of horizontal dimension antenna ports in the AAS antenna array and the number of vertical dimension antenna ports in the AAS antenna array; or, use the precoding codebook corresponding to the number of horizontal dimension antenna ports in the AAS antenna array and the number of vertical dimension antenna ports in the AAS antenna array to parse a signal from the UE.

21. An AAS-based system for information interaction, wherein the AAS-based system for information interaction comprises a UE according to any one of claims 11-15; or the AAS-based system for information interaction comprises a base station according to any one of claims 16-20.

FIG. 1

FIG. 2

FIG. 3

FIG. 4

UE

Request
receiving
module            101

Message
returning
module            102

Parsing
module            103

Signal
processing
module            104

FIG. 5

Base station

Transceiver
module            201

Forming
module            202

FIG. 6

202

Forming module

Parsing
unit — 321

Obtaining
unit — 322

calculating
unit — 323

Beamforming
unit — 324

FIG. 7

eNodeB

$\alpha_2$

$(x_1, y_1, z_1)$

$\alpha_1$

$(x_2, y_2, z_2)$

UE

FIG. 8

Base station

Transceiver module — 201

Forming module — 202

Signal processing module — 203

FIG. 9

A base station sends a connection reconfiguration request to a UE which accesses the base station — S101

The base station receives a measurement report message returned from the UE — S102

The base station performs beamforming according to the three-dimensional coordinate information of the UE carried in the measurement report message — S103

FIG. 10

The base station parses out the three-dimensional coordinate information of the UE from the measurement report message
/ S31

The base station obtains the three-dimensional coordinate information of itself
/ S32

The base station calculates the horizontal dimension angle of arrival and the vertical dimension angle of arrival of the UE relative to the base station according to formulas
/ S33

The base station performs beamforming on a beam emitted by an AAS antenna array of the base station in horizontal dimension and vertical dimension
/ S34

FIG. 11

A UE receives a connection reconfiguration request sent by a base station
/ S201

The UE returns a measurement report message to the base station according to the connection reconfiguration request
/ S202

FIG. 12

The UE parses out measurement configuration information from the connection reconfiguration request
/ S21

The UE obtains three-dimensional coordinate information of the UE according to information which is used to request the UE to report three-dimensional coordinates of the UE and is carried in measurement configuration information
/ S22

The UE encapsulates the three-dimensional coordinate information of the UE, forms a measurement report message and reports to the base station
/ S23

FIG. 13

UE

eNodeB

S301   Connection reconfiguration request

S302   Parsing out measurement
configuration information

S303   Obtaining three-dimensional
coordinate information of the UE

S304, Encapsulating the three-dimensional
coordinate information, and forming a
measurement report message

S305, Measurement report message

S306, Parsing out the three-dimensional
coordinate information of the UE

S307, Obtaining three-dimensional
coordinate information of the eNodeB

S308, Calculating the horizontal
dimension AOA and vertical dimension
AOA of the UE relative to the eNodeB

S309, Beamforming

S310, Parsing out an AAS characteristic
parameter of the eNodeB from the
connection reconfiguration request
Beamforming signal

S311, Using the precoding codebook
corresponding to the number of
horizontal dimension antenna ports and
the number of vertical dimension
antenna ports in the AAS antenna array
to process a transmission signal, and
forming a beam forming signal

S312, Using the precoding codebook
corresponding to the number of horizontal
dimension antenna ports and the number of
vertical dimension antenna ports in the AAS
antenna array to parse the beam forming
signal

S313, Using the precoding codebook
corresponding to the number of horizontal
dimension antenna ports and the number of
vertical dimension antenna ports in the AAS
antenna array to process a transmission signal

Transmission signal

S314, Using the precoding
codebook corresponding to the
number of horizontal dimension
antenna ports and the number of
vertical dimension antenna ports in
the AAS antenna array to parse the
signal from the UE

FIG. 14

<table>
<tr><td colspan="2" align="center">**INTERNATIONAL SEARCH REPORT**</td><td>International application No.<br>**PCT/CN2012/081181**</td></tr>
</table>

| **A. CLASSIFICATION OF SUBJECT MATTER** |
| --- |
| See the extra sheet<br>According to International Patent Classification (IPC) or to both national classification and IPC |

| **B. FIELDS SEARCHED** |
| --- |
| Minimum documentation searched (classification system followed by classification symbols)<br><br>IPC: H04W, H04Q, H04B |
| Documentation searched other than minimum documentation to the extent that such documents are included in the fields searched |
| Electronic data base consulted during the international search (name of data base and, where practicable, search terms used)<br><br>CNABS, CNTXT, CNKI: AAS, advanced antenna system, wave beam, form/shape, coordinate, location, GPS<br>VEN: AAS, beam+, form+/shap+, coordinate?, location, GPS |

| **C. DOCUMENTS CONSIDERED TO BE RELEVANT** | | |
| --- | --- | --- |
| Category* | Citation of document, with indication, where appropriate, of the relevant passages | Relevant to claim No. |
| X | WO 2010025996 A1 (ALCATEL LUCENT), 11 March 2010 (11.03.2010), see abstract, description, pages 3-5 and 11-17, and figures 1-2 | 1-2, 4-17, 19-21 |
| A | | 3, 18 |
| X | KR 20050099149 A (PANTECH & CURITEL COMMINC.), 13 October 2005 (13.10.2005), see abstract, description, pages 2-7, and figures 1-12 | 1-2, 4-17, 19-21 |
| A | | 3, 18 |
| A | US 2011143657 A1 (ELECTRONICS AND TELECOMMUNICATIONS RESEARCH INSTITUTE), 16 June 2011 (16.06.2011), see the whole document | 1-21 |
| A | CN 102014504 A (DATANG MOBILE COMMUNICATIONS EQUIPMENT CO., LTD.), 13 April 2011 (13.04.2011), see the whole document | 1-21 |
| A | CN 101754477 A (PEKING UNIVERSITY), 23 June 2010 (23.06.2010), see the whole document | 1-21 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 December 2012 (09.12.2012) | Date of mailing of the international search report<br>**20 December 2012 (20.12.2012)** |
| --- | --- |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**CHEN, Junru**<br><br>Telephone No.: (86-10) **62411493** |

Form PCT/ISA/210 (second sheet) (July 2009)

## INTERNATIONAL SEARCH REPORT
### Information on patent family members

International application No.

**PCT/CN2012/081181**

| Patent Documents referred in the Report | Publication Date | Patent Family | Publication Date |
|---|---|---|---|
| WO 2010025996 A1 | 11.03.2010 | CN 102204120 A | 28.09.2011 |
|  |  | EP 2161854 A3 | 16.06.2010 |
|  |  | EP 2161854 B1 | 12.01.2011 |
|  |  | KR 20110050559 A | 13.05.2011 |
|  |  | DE 602009000566 D1 | 24.02.2011 |
|  |  | EP 2161854 A2 | 10.03.2010 |
|  |  | KR 20110014239 A | 10.02.2011 |
|  |  | CN 102077490 A | 25.05.2011 |
|  |  | KR 1174727 B1 | 17.08.2012 |
|  |  | WO 2010025997 A1 | 11.03.2010 |
|  |  | IN 201102271 P4 | 03.08.2012 |
|  |  | US 20120281672 A1 | 08.11.2012 |
| KR 20050099149 A | 13.10.2005 | KR 100627958 B1 | 25.09.2006 |
| US 2011143657 A1 | 16.06.2011 | KR 2011068591 A | 22.06.2011 |
| CN 102014504 A | 13.04.2011 | WO 2011050687 A1 | 05.05.2011 |
| CN 101754477 A | 23.06.2010 | CN 101754477 B | 20.06.2012 |

Form PCT/ISA/210 (patent family annex) (July 2009)

## INTERNATIONAL SEARCH REPORT

| International application No. |
|---|
| **PCT/CN2012/081181** |

**CONTINUATION OF SECOND SHEET**

**A. CLASSIFICATION OF SUBJECT MATTER**

H04W 24/10 (2009.01) i

H04B 7/04 (2006.01) i

H04W 88/08 (2009.01) i

H04W 88/02 (2009.01) i

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110265893